# EUROPEAN PATENT APPLICATION

(11) **EP 4 704 389 A1**
(43) Date of publication of application: **04.03.2026**
(21) Application number: 25196808.7
(22) Date of filing: 19.08.2025
(51) Int. Cl.: H04L 25/02, H04B 17/14, H04L 1/24

(54) **LOW VOLTAGE DIFFERENTIAL SIGNALING (LVDS) SYSTEM HAVING A BUILT-IN SELF-TESTING (BIST) CIRCUIT**

(30) Priority: 30.08.2024 US 202418820921
(71) Applicant: NXP USA, Inc., Austin, TX 78735 (US)
(72) Inventor: Abhishek, Kumar, 5656AG Eindhoven (NL); Yadav, Vivek Kumar, 5656AG Eindhoven (NL)
(74) Representative: Miles, John Richard

(57) **Abstract**

A low voltage differential serial (LVDS) communication system includes a system-on-chip (SoC) which includes a transmitter configured to serially transmit data, a receiver configured to serially receive data, a loopback control circuit configured to provide transmitted test data from the transmitter directly to the receiver during testing, and a built-in self-test (BIST) circuit. The BIST circuit controls testing by setting a voltage level of a common mode voltage for the transmitter, providing a test data pattern for transmission by the transmitter and receiving the test data pattern from the receiver in which the loopback control circuit directly provides the transmitted test data pattern from the transmitter to the receiver when an internal loopback configuration is enabled, and determining whether the voltage level of the common mode voltage results in a pass or fail.

## Description

### Background

### Field

This disclosure relates generally to low voltage differential signaling (LVDS) systems, and more specifically, to an LVDS system with a BIST circuit.

### Related Art

LVDS is a technical standard that specifies electrical characteristics of a differential, serial communications protocol. LVDS typically operates at low power and can run at very high speeds, such as 5Gbps. In an LVDS transmission system, differential signals are provided via a pair of transmission lines to a load in which the pair of lines carry complementary signals. In one example, the pair of transmission lines may be twisted wires or traces on a printed circuit board. However, within an LVDS system, if one system-on-chip (SoC) is incompatible with another SoC, due, e.g., to different protocols used by the SoCs within the system, communication will fail and the silicon may need to be revised or redesigned in order to achieve compatibility, which is costly. Therefore, a need exists for increased flexibility to allow for compatibility between devices with an LVDS system.

### Brief Description of the Drawings

The present invention is illustrated by way of example and is not limited by the accompanying figures, in which like references indicate similar elements. Elements in the figures are illustrated for simplicity and clarity and have not necessarily been drawn to scale.
FIG. 1 illustrates, in block diagram form, an LVDS system having a first SoC with a corresponding BIST circuit and a second SoC, in accordance with an embodiment of the present invention.
FIG. 2 illustrates, in flow diagram form, a method of operation within the LVDS system using the BIST circuit of the first SoC, in accordance with an embodiment of the present invention.
FIG. 3 illustrates a timing diagram for signals within the LVDS system of FIG. 1, in accordance with an embodiment of the present embodiment.

### Detailed Description

In one aspect, a BIST circuit of a first SoC within an LVDS system is used to determine valid ranges for one or more communication parameters so that the parameters can be properly set within the LVDS system to be compatible with a second SoC within the LVDS system. For example in one embodiment, the first SoC may includes an internal loopback path to communicate information from the transmitter of the first SoC directly to the receiver of the first SoC during testing. In another aspect, the first SoC may be coupled to a second SoC of the LVDS system, in which the first SoC utilizes an external loopback path to communicate information from the transmitter of the first SoC, through a receiver and transmitter of the second SoC, back to the receiver of the first SoC during testing. In one embodiment, with the use of the external loopback path, the BIST circuit may further set the values of the communication parameters of the first SoC based on testing results obtained by the BIST circuit.

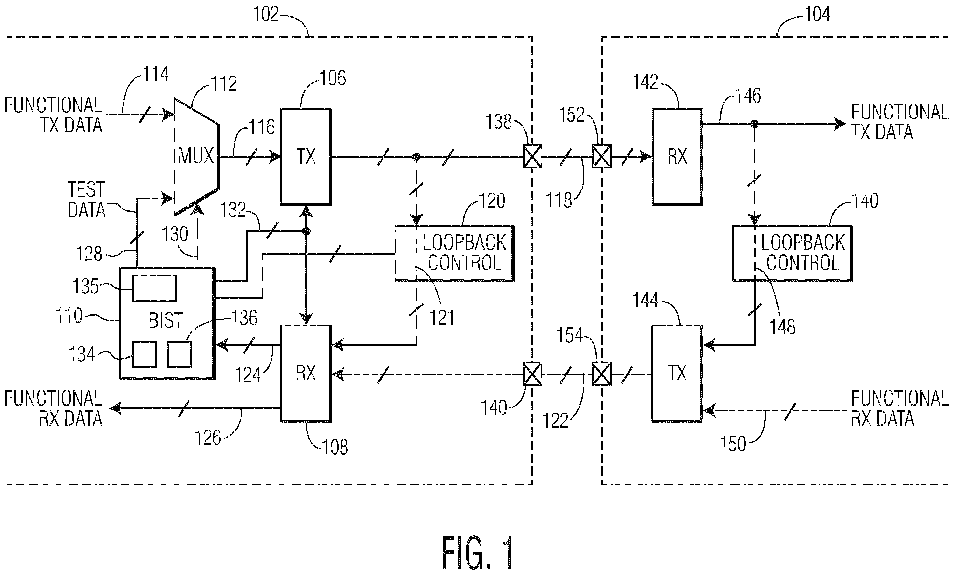

FIG. 1 illustrates an LVDS system 100 having a first SoC 102 and a second SoC 104, in accordance with one embodiment of the present invention. Each SoC includes a transmitter (TX) and receiver (RX) capable of communicating LVDS signals, as known in the art, via an LVDS interface including communication conductors (e.g. wires) 118 and 122 between SoC 102 and SoC 104. Each SoC can be any type of SoC or device, and can include any type of circuitry, as needed. For example, each SoC can implement a microcontroller or microprocessor. SoC 102 includes a transmitter (TX) 106 which is coupled to communicate data external to SoC 102 via an output (I/O) pad 138, and a receiver (RX) 108 which is coupled to receive data from external SoC 104 via an input pad 140. For example, TX 106 can transmit data to a receiver (RX) 142 of SoC 104 via pad 138, conductors 118, and an input pad 152 of SoC 104. Similarly, RX 108 can receive data from a transmitter (TX) 144 of SoC 104 via an output pad 154 of SoC 104, conductors 122, and input pad 140. Note that output pad 138 and input pad 140 of SoC 102 can be implemented as two separate pads or can be implemented as a single input/output (I/O) pad. In the illustrated embodiment, although drawn separately for ease of description, pads 138 and 140 are formed by a single I/O pad and may be referred to as I/O pad 138/140. The same is true with the input and output pads of SoC 104 referenced above and may therefore be collectively referred to as I/O pad 152/154. SoC 102 also includes a loopback control circuit 120 which allows transmit data from TX 106 to be provided directly to RX 108 within SoC 102.

In addition, SoC 102 includes a multiplexer (MUX) 112 having a first set of inputs coupled to receive functional transmit data (functional TX data) during normal operation from circuitry within SoC 102 to be communicated outside of SoC 102 via TX 106. MUX 112 has a second set of inputs coupled to receive test data from BIST circuit 110 during testing to be communicated outside of SoC 102 via TX 106. MUX 112 communicates one of the first set or second set of inputs via conductors 116 to TX 106 for transmission outside of SoC 102 based on a control signal received via conductor 130 from BIST circuit 110.

BIST circuit 110 also provides communication parameters via conductors 132 to TX 106 and RX 108, as needed, and can further provide control information to loopback control 120 to enable the internal loopback (i.e. feedback loop) which allows test data transmitted by TX 106 to be directly provided to RX 108 via a path 121 and returned to BIST circuit 110. In one embodiment, as will be described below, BIST circuit 110 can be used to determine communication parameters for TX 106 and RX 108 without being connected to another SoC (e.g. without the presence of SoC 104) by using the internal loopback. In the case that SoC 102 is coupled to SoC 104, as illustrated in FIG. 1, SoC 104 includes a loopback control circuit 140 which controls RX 142 and TX 144 to implement an external loopback (i.e. feedback loop) by communicating transmitted test data received by RX 142 from SoC 102 to TX 144, via a path 148, so that TX 144 can return the transmitted test data back to SoC 102. In this example, BIST circuit 110 can be used to determine communication parameters for TX 104 and RX 108 by using the external loopback mechanism of SoC 104. Note that loopback control circuit 140, during normal operation, simply forwards functional RX data received via RX 142 on conductors 146 to circuitry with SoC 104 and provides functional TX data received from circuitry within SoC 104 on conductors 150 to TX 144 for transmission outside SoC 104.

During normal operation, LVDS system 100 operates as known in the art in which functional TX data, received from circuitry within SoC 102 via conductors 114 can be transmitted by TX 106 via conductors 118 to RX 142 of SoC 104 and functional RX data, received by RX 108 from TX 144 of SoC 104 via conductors 122, can be communicated to circuitry within SoC 102 via conductors 126. In this case, the select control signal via conductor 130 is set to select the functional data rather than test data to be provided to TX 106 for transmission.

During testing, BIST circuit 110 sets communication parameters in TX 104 and RX 108, as needed, via conductors 132. These communication parameters may include one or more of common mode voltage (Vcm), transmitter voltage swing, frequency of operation, BIST pattern (either encoded or raw), dual termination mode, etc. The communication parameters can be an indication of the parameter, or the parameter itself. For example, BIST circuit 110 can provide an indication of what Vcm to use or may include a voltage regulator to provide the Vcm itself. Once the appropriate communication parameters are set, BIST circuit 110 can generate and send test data, via conductors 128 and MUX 112, to TX 106 (in which the select control signal via conductor 130 is set to select the test data rather than the functional data). BIST circuit 110 can receive the test data back from RX 108 either via the internal loopback within SoC 102 or via the external loopback which goes through SoC 104. BIST circuit 110 can compare the sent test data to the received test data to determine if communication of the test data was successful or not. If not, in one embodiment, BIST circuit 110 can alter one or more of the communication parameters and resend the test data to see if communication was successful. As will be described in more detail below, BIST circuit 110 may also include one or more iteration counters (including a Vcm iteration counter) within counters 134.

Note that if the internal loopback of SoC 102 is enabled (via loop back control circuit 120), minimal delay is added to providing and receiving test data by BIST circuit 110. However, if the internal loopback is not available or not enabled, then it may be possible to enable the external loopback through another SoC (such as in SoC 104 with conductors 148 and loopback control 140). In this case, there is a higher delay in providing and receiving test data by BIST circuit 110 as compared to the internal loopback since the test data has to additionally progress through conductors 118, to RX 142, then back through TX 144 to RX 108 as opposed to progressing directly from TX 106 to RX 108 within SoC 102. Therefore, in one embodiment, counters 134 may also include a wait timer.

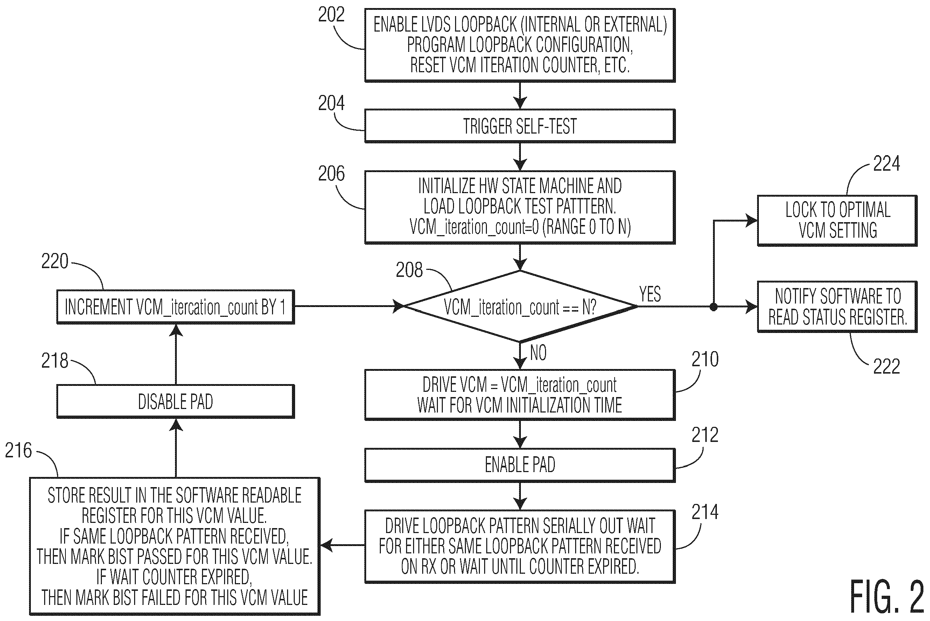

FIG. 2 illustrates, in flow diagram form, a method 200 of operation within the LVDS system using BIST circuit 110 of SoC 102, in accordance with one embodiment of the present invention. In the illustrated embodiment, it is assumed that BIST circuit 110 controls the Vcm of LVDS system 100 by providing the Vcm as a control parameter to TX 106. By controlling Vcm, BIST circuit 110 will determine an appropriate (i.e. valid) range for Vcm or may determine a selected or optimal Vcm resulting in compatibility with SoC 104. In addition to providing the Vcm, BIST circuit 110 also selects and provides the desired test pattern (as encrypted data or raw data) to TX 106. While it is possible that BIST circuit 110 also controls additional parameters of LVDS system 100, such as those listed above (e.g. swing, frequency, termination mode) to determine appropriate ranges or selected values for the additional parameters, the illustrated embodiment will be described in reference to the Vcm parameter.

Note that method 200 can be implemented using either loopback mechanism, depending on what is available. That is, the loopback referred to in method 200 can be implemented using an internal loopback of SoC 102, or the external loopback provided by SoC 104. Therefore, method 200 begins with block 202 in which either the internal or the external LVDS loopback mechanism is enabled by BIST circuit 110. This includes programming the appropriate loopback configuration (e.g. programming loopback control circuit 120 or 140 or both, as needed) to implement the proper loopback mechanism. Any other initialization, as needed, can also be performed in block 202, such as resetting counters 134 (e.g. resetting the Vcm iteration counter) and selecting or setting the desired test pattern (which includes a pattern of data values to be serially transmitted by TX 106 and subsequently received by RX 108, and therefore may also be referred to as a test data pattern). In one embodiment, the Vcm counter iterates from 0 to N, in which N+1 represents the total number of possible Vcm values. A count value of 0 can represent a lowest voltage level for Vcm, and a count value of N can represent the highest voltage level for Vcm. Each count value between 0 and N can therefore represent an increasing voltage level of Vcm. In one embodiment, with each iteration, the voltage level of Vcm is incremented by a same fixed step value.

At block 204, a self-test by BIST circuit 110 is triggered to begin self-testing (which can be done by, e.g., a processor or self test controller of SoC 102). In one embodiment, the self-test can be performed by a hardware (HW) state machine 136 stored within BIST circuit 110, as known in the art. Alternatively, the self-test can be performed under software (SW) control. In block 206, the self-testing begins by BIST circuit 110 initializing HW state machine 136 and loading a first loopback test pattern for transmission by TX 106. This test pattern can be generated by BIST circuit 110 (or stored within BIST circuit 110 or within TX 106) for transmission by TX 106 via conductors 118 to RX 142 (for an external loopback implementation) or directly back to RX 108 (for an internal loopback implementation). At this point, the count value of VCM iteration counter is still zero (i.e. Vcm_iteration_count=0).

At decision diamond 208 it is determined if Vcm_iteration_count has reached its maximum value, N. If not, method 200 proceeds to block 210 in which the Vcm for TX 106 is driven at the voltage level indicated by Vcm_iteration_count. For the first iteration, in which Vcm_iteration_count=0, Vcm is driven at the lowest voltage level for Vcm. After waiting a Vcm initialization time (which allows the driven value of Vcm to properly settle), at block 212, I/O pad 138/140 is enabled. Next, at block 214, the loopback test pattern is serially driven out by TX 106. At this time, the wait counter in counters 134 can be initiated to start counting. RX 108 waits for the loopback test pattern to be received (while the wait counter continues counting). In the case of utilizing the internal loopback, the loopback test pattern serially driven out by TX 106 is directly received by RX 140, without being transmitted outside of SoC 102. In the case of utilizing the external loopback, the loopback test pattern serially driven out by TX 106 is transmitted to RX 142 of SoC 104 via conductors 118 and is eventually received by RX 140 via conductor 122 from TX 144 of SoC 104. In this case, loopback control 140 of SoC 104 samples the loopback test pattern received by RX 142 and provides the received pattern to TX 144 for transmission back to SoC 102. (In an alternate embodiment, RX 108 looks for a specific pattern to identify when to start sampling loopback data. This may help mitigate the time delay with an external loopback because RX 108 will not sample the loopback data until the specific pattern is identified, thus indicating the data is ready to be sampled.)

At block 216, upon RX 108 receiving the loopback test pattern, BIST circuit 110 compares the received loopback test pattern with the originally sent loopback test pattern. If they match (i.e. if the same loopback test pattern was received by RX 108), then the current Vcm value (as indicated by Vcm_iteration_count) is marked as passing BIST. If, however, the received test pattern does not match or the wait counter has expired (indicating that a test pattern was not received in time), the current Vcm value is marked as failing BIST. The results for each Vcm value can be stored in a storage circuit 135 within BIST circuit 110. For example, a table may be used to store a pass or fail indicator with each tested Vcm value (e.g. with each count value of Vcm counter 134). The storage circuit may also store additional parameters used in combination with the tested Vcm values, and may further store similar information for other configuration parameters. Next, at block 218, I/O pad 138/140 is disabled. At block 220, the VM counter is incremented by one to indicate a next voltage level for Vcm to be tested. This may correspond to a voltage level of Vcm increased by a predetermined voltage step value.

At decision diamond 208, if Vcm_iteration_count has reached N (or has surpassed N), the self-test is done and the obtained pass/fail information for the Vcm values (stored in storage circuit 135) can be used, as needed, to provide a valid Vcm range or to lock in a particular Vcm value. For example, in one embodiment, the self-test is performed within SoC 102, using the internal feedback. In this case, SoC 102 need not be coupled to another SoC. In this case, at block 222 the valid values of Vcm which resulted in passing test results can be stored in a status register which can then be read, as needed, when setting up LVDS system 100. In one embodiment, a range of valid Vcm values can be stored in the status register. In another embodiment, the self-test is performed while coupled to SoC 104, using the external loopback. In this case, at block 224 (rather than block 222), the self-test of the different Vcm values can be used to determine (i.e. lock in) a selected optimal Vcm value which results in compatibility (i.e. in correct operation) with SoC 104.

While the self-testing of FIG. 2 was described in reference to adjusting and determining valid values for Vcm, similar self-testing can be performed for any communication parameter (e.g. swing, frequency, etc.) or combination of parameters (e.g. Vcm and frequency, etc.). In these cases, with each iteration, the next value of a communication parameter is selected, and a test pattern is transmitted using the selected next value to determine if the communication passes or fails. The same can be done with a set of communication parameters, in which, with each iteration, the value of each parameter within the set of communication parameters can be adjusted. Also, in the example of FIG. 2, Vcm was incremented in a step-wise fashion, however, a communication parameter can be adjusted differently with each iteration (e.g. decreased in a step-wise fashion, or adjusted in accordance with a binary search pattern).

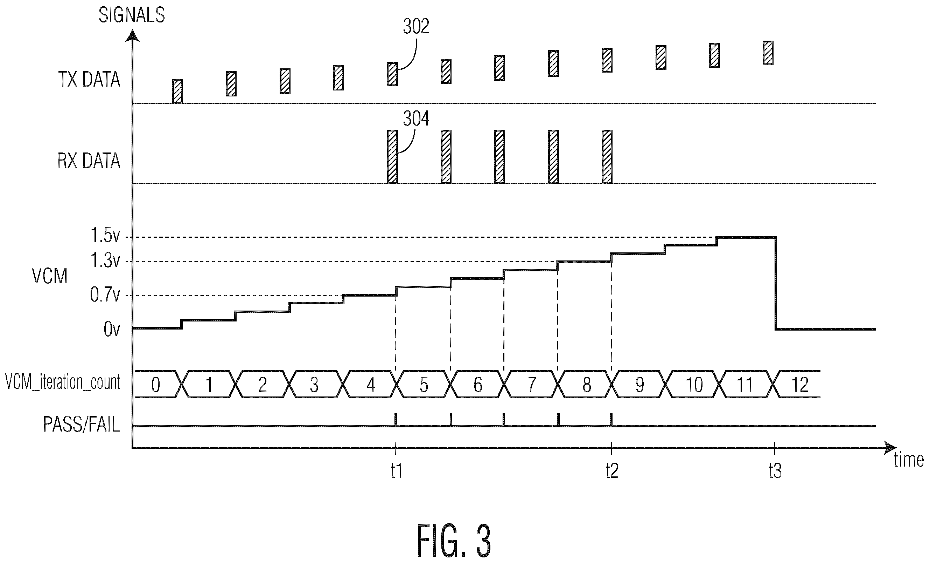

FIG. 3 illustrates a timing diagram for various signals of FIG. 1, corresponding to the testing of method 200 of FIG. 2, in accordance with an embodiment of the present invention. FIG. 3 illustrates the TX DATA corresponding to the test data patterns transmitted by TX 106, the RX DATA corresponding to the test data patterns received by RX 108, Vcm_iteration_count, Vcm being driven at increasing voltage levels (each voltage level corresponding to a corresponding value of Vcm_iteration_count), and a pass/fail indicator. Vcm is incremented from 0V up to 1.5V in equal voltage step sizes, as controlled by BIST circuit 110, in which each value of Vcm_iteration_count corresponds to a particular voltage level of Vcm. TX DATA and RX DATA illustrate a shaded rectangle which indicates that data is being transmitted or received. For example, shaded rectangle 302 corresponds to a test data pattern being transmitted by TX 106 before time t1, and shaded rectangle 304 corresponds to the test data pattern being received by RX 108, also before time t1. Note that the TX DATA illustrated in FIG. 3 has a smaller voltage swing around the common mode voltage than a full rail-to-tail swing, as indicated by the smaller rectangles, with the common mode voltage increasing over time. In the illustrated embodiment, it is assumed that the internal loopback is utilized within SoC 102, resulting in very little delay between transmitting and receiving the test data pattern. At time t1 the received test pattern is compared with the transmitted test pattern, and a pulse on pass/fail, as indicated at time t1, indicates that the test patterns matched, resulting in a pass of the self-test. A lack of pulse on pass/fail indicates that a match did not occur (e.g. a fail of the self-test).

At time t1, the self-test passed at a Vcm level corresponding to Vcm_iteration_count=4, which corresponds to Vcm=0.7V in the illustrated embodiment. Note that at each increasing value of Vcm (of Vcm_iteration_count), the pattern matches continue to match until after time t2. Therefore, the greatest value of Vcm in which testing passes corresponds to Vcm_iteration_count=8, which corresponds to Vcm=1.3V in the illustrated embodiment. After performing the self-testing by sweeping Vcm from 0 to 1.5V, BIST circuit 110 determines that, for the current configuration of TX 106 and RX 108, Vcm results in valid operation at values in a range of 0.7V to 1.3V. The sweeping of Vcm can also be performed, for example, across process, voltage, and temperature (PVT) values, to ensure proper compatibility across PVT for an LVDS system. In this example, a range of valid Vcm values can be determined for various combinations of PVT values.

In one embodiment, the configuration of TX 106 and RX 108 can be changed (by, e.g., varying one or more other configuration parameters) to result in a system with a higher drive strength or to implement dual termination to improve jitter performance. In the former case, the same testing can be applied in which the resulting valid range of Vcm may instead end up as being a larger range 0.6V to 1.3V for the former and a smaller range 0.8V to 1.3V for the latter. In other embodiments, different communication parameters, other than or in addition to Vcm, can be varied with each count value of iteration counter 134. Any of the communication parameters can also be tested across PVT values, as described above for Vcm.

Therefore, by now it can be understood how BIST circuit 110 can be used to determine one or more valid ranges for a communication parameter, such as Vcm, in an LVDS system. In one embodiment, BIST circuit 110 can perform its self-testing using an internal loopback configuration within an SoC to determine the one or more valid ranges. The valid ranges can be stored within status registers within the SoC so that, upon being integrated with another SoC to form an LVDS system, the proper communication parameters can be selected to achieve compatibility for the LVDS communications between the SoCs. In another embodiment, BIST circuit 110 can perform its self-testing while the SoC is integrated within an LVDS system with another SoC, using an external loopback configuration through the other SoC so as to select one or more valid ranges for a communication parameter to ensure compatibility between the SoCs. In this embodiment, BIST circuit 110 can select an optimal value for the communication parameter.

In this manner, LVDS systems can be set up with multiple SoCs, even if the SoCs implement different LVDS protocols or if the protocols are not known ahead of time. For example, traditionally, LVDS systems support only a static common mode voltage (Vcm), in which changes to the Vcm required for compatibility require a silicon revision of the SoC. However, with the use of a BIST circuit within an SoC which utilizes either an internal or external feedback method, valid operating ranges for a communication parameter, e.g., the Vcm, can be determined for the TX and RX of the SoC. This allows the SoC to be integrated within a variety of other SoCs, providing flexibility to customers to choose an appropriate configuration for their needs, without requiring costly silicon revisions of the SoC itself.

A low voltage differential serial (LVDS) communication system includes a system-on-chip (SoC) which includes a transmitter configured to serially transmit data, a receiver configured to serially receive data, a loopback control circuit configured to provide transmitted test data from the transmitter directly to the receiver during testing, and a built-in self-test (BIST) circuit. The BIST circuit controls testing by setting a voltage level of a common mode voltage for the transmitter, providing a test data pattern for transmission by the transmitter and receiving the test data pattern from the receiver in which the loopback control circuit directly provides the transmitted test data pattern from the transmitter to the receiver when an internal loopback configuration is enabled, and determining whether the voltage level of the common mode voltage results in a pass or fail.

The semiconductor substrate described herein can be any semiconductor material or combinations of materials, such as gallium arsenide, silicon germanium, silicon-on-insulator (SOI), silicon, monocrystalline silicon, the like, and combinations of the above.

The conductors as discussed herein may be illustrated or described in reference to being a single conductor, a plurality of conductors, unidirectional conductors, or bidirectional conductors. However, different embodiments may vary the implementation of the conductors. For example, separate unidirectional conductors may be used rather than bidirectional conductors and vice versa. Also, plurality of conductors may be replaced with a single conductor that transfers multiple signals serially or in a time multiplexed manner. Likewise, single conductors carrying multiple signals may be separated out into various different conductors carrying subsets of these signals. Therefore, many options exist for transferring signals.

The terms "assert" or "set" and "negate" (or "deassert" or "clear") are used herein when referring to the rendering of a signal, status bit, or similar apparatus into its logically true or logically false state, respectively. If the logically true state is a logic level one, the logically false state is a logic level zero. And if the logically true state is a logic level zero, the logically false state is a logic level one.

Each signal described herein may be designed as positive or negative logic, where negative logic can be indicated by a bar over the signal name or an asterisk (*) following the name. In the case of a negative logic signal, the signal is active low where the logically true state corresponds to a logic level zero. In the case of a positive logic signal, the signal is active high where the logically true state corresponds to a logic level one. Note that any of the signals described herein can be designed as either negative or positive logic signals. Therefore, in alternate embodiments, those signals described as positive logic signals may be implemented as negative logic signals, and those signals described as negative logic signals may be implemented as positive logic signals.

The symbol "$" preceding a number indicates that the number is represented in its hexadecimal or base sixteen form. The symbol "%" preceding a number indicates that the number is represented in its binary or base two form.

Because the apparatus implementing the present invention is, for the most part, composed of electronic components and circuits known to those skilled in the art, circuit details will not be explained in any greater extent than that considered necessary as illustrated above, for the understanding and appreciation of the underlying concepts of the present invention and in order not to obfuscate or distract from the teachings of the present invention.

Although the invention has been described with respect to specific conductivity types or polarity of potentials, skilled artisans appreciated that conductivity types and polarities of potentials may be reversed.

Moreover, the terms "front," "back," "top," "bottom," "over," "under" and the like in the description and in the claims, if any, are used for descriptive purposes and not necessarily for describing permanent relative positions. It is understood that the terms so used are interchangeable under appropriate circumstances such that the embodiments of the invention described herein are, for example, capable of operation in other orientations than those illustrated or otherwise described herein.

Some of the above embodiments, as applicable, may be implemented using a variety of different information processing systems. For example, although FIG. 1 and the discussion thereof describe an exemplary information processing architecture, this exemplary architecture is presented merely to provide a useful reference in discussing various aspects of the invention. Of course, the description of the architecture has been simplified for purposes of discussion, and it is just one of many different types of appropriate architectures that may be used in accordance with the invention. Those skilled in the art will recognize that the boundaries between logic blocks are merely illustrative and that alternative embodiments may merge logic blocks or circuit elements or impose an alternate decomposition of functionality upon various logic blocks or circuit elements. Thus, it is to be understood that the architectures depicted herein are merely exemplary, and that in fact many other architectures can be implemented which achieve the same functionality.

Furthermore, those skilled in the art will recognize that boundaries between the functionality of the above described operations merely illustrative. The functionality of multiple operations may be combined into a single operation, and/or the functionality of a single operation may be distributed in additional operations. Moreover, alternative embodiments may include multiple instances of a particular operation, and the order of operations may be altered in various other embodiments.

Although the invention is described herein with reference to specific embodiments, various modifications and changes can be made without departing from the scope of the present invention as set forth in the claims below. For example, different circuitry can be used to direct data from TX 106 to RX 108 via either an internal loopback mechanism of an SoC or an external loopback mechanism via another SoC coupled to the SoC. Accordingly, the specification and figures are to be regarded in an illustrative rather than a restrictive sense, and all such modifications are intended to be included within the scope of the present invention. Any benefits, advantages, or solutions to problems that are described herein with regard to specific embodiments are not intended to be construed as a critical, required, or essential feature or element of any or all the claims.

The term "coupled," as used herein, is not intended to be limited to a direct coupling or a mechanical coupling.

Furthermore, the terms "a" or "an," as used herein, are defined as one or more than one. Also, the use of introductory phrases such as "at least one" and "one or more" in the claims should not be construed to imply that the introduction of another claim element by the indefinite articles "a" or "an" limits any particular claim containing such introduced claim element to inventions containing only one such element, even when the same claim includes the introductory phrases "one or more" or "at least one" and indefinite articles such as "a" or "an." The same holds true for the use of definite articles.

Unless stated otherwise, terms such as "first" and "second" are used to arbitrarily distinguish between the elements such terms describe. Thus, these terms are not necessarily intended to indicate temporal or other prioritization of such elements.

The following are various embodiments of the present invention. Note that any of the aspects below can be used in any combination with each other and with any of the disclosed embodiments.

In an embodiment, a low voltage differential serial (LVDS) communication system includes a system-on-chip (SoC) which includes a transmitter configured to serially transmit data; a receiver configured to serially receive data; a loopback control circuit configured to provide transmitted test data from the transmitter directly to the receiver during testing; and a built-in self-test (BIST) circuit, configured to control testing by setting a voltage level of a common mode voltage for the transmitter, providing a test data pattern for transmission by the transmitter and receiving the test data pattern from the receiver, wherein the loopback control circuit directly provides the transmitted test data pattern from the transmitter to the receiver when an internal loopback configuration is enabled; and determining whether the voltage level of the common mode voltage results in a pass or fail. In one aspect, when the internal loopback is enabled, the loopback control circuit of the SoC is configured to provide the transmitted test data pattern from the transmitter directly to the receiver during testing without providing the test data pattern external to the SoC. In another aspect of the above embodiment, the SoC further includes a multiplexer (MUX) having a first input configured to receive functional data from the SoC, a second input configured to receive test data from the BIST circuit, a control input, and an output configured to provide one of the functional data or the test data to the transmitter. In a further aspect, during testing, the BIST circuit is configured to provide the test data pattern via the second input of the MUX to the transmitter. In another aspect of the above embodiment, the BIST circuit is further configured to perform testing by adjusting the voltage level of the common mode voltage, wherein the transmitter repeats transmitting the test data pattern; repeating the receiving the test data pattern; and determining whether the adjusted voltage level of the common mode voltage results in a pass or fail. In a further aspect, the BIST circuit is configured to perform the testing by iteratively adjusting the voltage level of the common mode voltage, wherein, with each iteration, the transmitter repeats transmitting the test data pattern and the BIST circuit repeats receiving the test data pattern from the receiver to determine a range of valid voltage levels for the common mode voltage. In yet a further aspect, the BIST circuit includes an iteration counter, and the BIST is configured to perform the testing by increasing a count value of the iteration counter with each iteration, wherein the iteratively adjusted voltage level of the common mode voltage for each iteration is indicated by the count value. In another aspect, the BIST circuit is configured to perform testing by setting one or more additional communication parameters for the transmitter and the receiver in addition to setting the voltage level of the common mode voltage. In another aspect, the SoC is configured to communication with a second SoC via an LVDS interface between the SoC and the second SoC, the second SoC having a second loopback control circuit, wherein the providing the test pattern for transmission by the transmitter and receiving the test data pattern from the receiver when an external loopback configuration is enabled comprises transmitting the test pattern to a receiver of the second SoC, the second loopback control circuit directly providing the test pattern from the receiver of the second SoC to a transmitter of the second SoC, and the transmitter of the second SoC transmitting the test pattern back to the receiver of the SoC. In a further aspect, the BIST circuit is configured to enable only one of the internal loopback configuration or the external loopback configuration for the testing.

In another embodiment, a low voltage differential serial (LVDS) communication system includes a first system-on-chip (SoC), wherein the first SoC is configured to communication with a second SoC via an LVDS interface, and the first SoC includes a transmitter configured to serially transmit data; a receiver configured to serially receive data; a first loopback control circuit configured to provide transmitted test data from the transmitter directly to the receiver during testing; and a built-in self-test (BIST) circuit, configured to perform testing using one of an internal loopback configuration or an external loopback configuration by setting a voltage level of a common mode voltage for the transmitter and the receiver, providing a test data pattern for transmission by the transmitter and receiving the test data pattern from the receiver, wherein, when testing using the internal loopback configuration, the loopback control circuit directly provides the transmitted test data pattern to the receiver, and when testing using the external loopback configuration, the test data pattern is transmitted from the transmitter of the first SoC and through a receiver and transmitter of the second SoC prior to receiving the test data pattern at the receiver of the first SoC, and determining whether the voltage level of the common mode voltage results in a pass or fail. In one aspect of the another embodiment, when using the internal loopback configuration, the loopback control circuit of the SoC is configured to provide the transmitted test data pattern from the transmitter directly to the receiver during testing without providing the test data pattern to the second SoC. In another aspect, the SoC further includes a multiplexer (MUX) having a first input configured to receive functional data from the SoC, a second input configured to receive test data from the BIST circuit, a control input, and an output configured to provide one of the functional data or the test data to the transmitter. In a further aspect, during testing, the BIST circuit is configured to provide the test data pattern via the second input of the MUX to the transmitter. In another aspect of the another embodiment, the BIST circuit is configured to perform testing by adjusting the voltage level of the common mode voltage, wherein the transmitter repeats transmitting the test data pattern; repeating the receiving the test data pattern; and determining whether the adjusted voltage level of the common mode voltage results in a pass or fail. In a further aspect, the BIST circuit is configured to perform the testing by iteratively adjusting the voltage level of the common mode voltage, wherein, with each iteration, the transmitter repeats transmitting the test data pattern and the BIST circuit repeats receiving the test data pattern from the receiver to determine a range of valid voltage levels for the common mode voltage.

In yet another embodiment, in an SoC configured to be used in an LVDS communication system to communicate with a second SoC, a method of performing testing controlled by a built-in self-test (BIST) circuit of the SoC includes enabling testing in one of an internal loopback configuration or an external loopback configuration; setting, by the BIST circuit, an initial voltage level of a common mode voltage for a transmitter and a receiver of the SoC; transmitting a test data pattern by the transmitter; waiting to receive the test data pattern by the receiver; and, when the test pattern is received by the receiver, determining by the BIST circuit whether the received test pattern matches the test data pattern provided to the transmitter to determine whether the voltage level of the common mode voltage results in a pass or fail. When the testing is enabled in the internal loopback configuration, the test data pattern transmitted by the transmitter is provided directly to the receiver of the SoC, and when testing is enabled in the external loopback configuration, the test data pattern is transmitted from the transmitter of the SoC through a receiver and transmitter of the second SoC prior to receiving the test data pattern at the receiver of the SoC. In one aspect of the yet another embodiment, the method further includes initiating a wait counter when the test data pattern is transmitted by the transmitter; and, when the wait counter expires while waiting to receive the test pattern by the receiver, the testing fails. In another aspect, the method further includes, after determining whether the voltage level of the common mode voltage results in the pass or fail, adjusting, by the BIST circuit, the voltage level of the common mode voltage for the transmitter and the receiver of the SoC; repeating transmitting the test data pattern and waiting to receive the test data pattern by the receiver; determining, by the BIST circuit, whether the adjusted voltage level of the common mode voltage results in a pass or fail; and determining, by the BIST, a range of valid voltage levels for the common mode voltage based on the pass or fail results of the testing. In another aspect of the yet another embodiment, the BIST circuit sets one or more additional communication parameters for the transmitter and the receiver in addition to setting the initial voltage level of the common mode voltage.

## Claims

1. A low voltage differential serial (LVDS) communication system, comprising: a system-on-chip (SoC), comprising:
a transmitter configured to serially transmit data;
a receiver configured to serially receive data;
a loopback control circuit configured to provide transmitted test data from the transmitter directly to the receiver during testing; and
a built-in self-test (BIST) circuit, configured to control testing by:
setting a voltage level of a common mode voltage for the transmitter,
providing a test data pattern for transmission by the transmitter and receiving the test data pattern from the receiver, wherein the loopback control circuit directly provides the transmitted test data pattern from the transmitter to the receiver when an internal loopback configuration is enabled, and
determining whether the voltage level of the common mode voltage results in a pass or fail.

2. The LVDS communication system of claim 1, wherein, when the internal loopback is enabled, the loopback control circuit of the SoC is configured to provide the transmitted test data pattern from the transmitter directly to the receiver during testing without providing the test data pattern external to the SoC.

3. The LVDS communication system of any preceding claim, wherein the SoC further comprises:
a multiplexer (MUX) having a first input configured to receive functional data from the SoC, a second input configured to receive test data from the BIST circuit, a control input, and an output configured to provide one of the functional data or the test data to the transmitter.

4. The LVDS communication system of claim 3, wherein, during testing, the BIST circuit is configured to provide the test data pattern via the second input of the MUX to the transmitter.

5. The LVDS communication system of any preceding claim, wherein the BIST circuit is further configured to perform testing by:
adjusting the voltage level of the common mode voltage, wherein the transmitter repeats transmitting the test data pattern;
repeating the receiving the test data pattern; and
determining whether the adjusted voltage level of the common mode voltage results in a pass or fail.

6. The LVDS communication system of claim 5, wherein the BIST circuit is configured to perform the testing by iteratively adjusting the voltage level of the common mode voltage, wherein, with each iteration, the transmitter repeats transmitting the test data pattern and the BIST circuit repeats receiving the test data pattern from the receiver to determine a range of valid voltage levels for the common mode voltage.

7. The LVDS communication system of claim 6, wherein the BIST circuit comprises an iteration counter, and the BIST is configured to perform the testing by increasing a count value of the iteration counter with each iteration, wherein the iteratively adjusted voltage level of the common mode voltage for each iteration is indicated by the count value.

8. The LVDS communication system of any preceding claim, wherein the BIST circuit is configured to perform testing by setting one or more additional communication parameters for the transmitter and the receiver in addition to setting the voltage level of the common mode voltage.

9. The LVDS communication system of any preceding claim, wherein the SoC is configured to communication with a second SoC via an LVDS interface between the SoC and the second SoC, the second SoC having a second loopback control circuit, wherein the providing the test pattern for transmission by the transmitter and receiving the test data pattern from the receiver when an external loopback configuration is enabled comprises transmitting the test pattern to a receiver of the second SoC, the second loopback control circuit directly providing the test pattern from the receiver of the second SoC to a transmitter of the second SoC, and the transmitter of the second SoC transmitting the test pattern back to the receiver of the SoC.

10. The LVDS communication system of claim 9, wherein the BIST circuit is configured to enable only one of the internal loopback configuration or the external loopback configuration for the testing.

11. In an SoC configured to be used in an LVDS communication system to communicate with a second SoC, a method of performing testing controlled by a built-in self-test (BIST) circuit of the SoC comprises:
enabling testing in one of an internal loopback configuration or an external loopback configuration;
setting, by the BIST circuit, an initial voltage level of a common mode voltage for a transmitter and a receiver of the SoC;
transmitting a test data pattern by the transmitter;
waiting to receive the test data pattern by the receiver; and
when the test pattern is received by the receiver, determining by the BIST circuit whether the received test pattern matches the test data pattern provided to the transmitter to determine whether the voltage level of the common mode voltage results in a pass or fail,
wherein, when the testing is enabled in the internal loopback configuration, the test data pattern transmitted by the transmitter is provided directly to the receiver of the SoC, and when testing is enabled in the external loopback configuration, the test data pattern is transmitted from the transmitter of the SoC through a receiver and transmitter of the second SoC prior to receiving the test data pattern at the receiver of the SoC.

12. The method of claim 11, further comprising:
initiating a wait counter when the test data pattern is transmitted by the transmitter; and
when the wait counter expires while waiting to receive the test pattern by the receiver, the testing fails.

13. The method of claim 11 or 12, further comprising, after determining whether the voltage level of the common mode voltage results in the pass or fail:
adjusting, by the BIST circuit, the voltage level of the common mode voltage for the transmitter and the receiver of the SoC;
repeating transmitting the test data pattern and waiting to receive the test data pattern by the receiver;
determining, by the BIST circuit, whether the adjusted voltage level of the common mode voltage results in a pass or fail; and
determining, by the BIST, a range of valid voltage levels for the common mode voltage based on the pass or fail results of the testing.

14. The method of any of claims 11 to 13, wherein the BIST circuit sets one or more additional communication parameters for the transmitter and the receiver in addition to setting the initial voltage level of the common mode voltage.
